# EUROPÄISCHE PATENTANMELDUNG

(11) **EP 4 813 938 A1**
(43) Veröffentlichungstag der Anmeldung: **30.09.2026**
(21) Anmeldenummer: 25166512.1
(22) Anmeldetag: 27.03.2025
(51) Int. Cl.: C03B 19/14

(54) **VERFAHREN ZUR HERSTELLUNG EINES SIO2-SOOTKÖRPERS MIT EINER DIFFUSIONSBARRIERE**

(71) Anmelder: Heraeus Quarzglas GmbH & Co. KG, 63450 Hanau (DE)
(72) Erfinder: Kayser, Thomas, 06766 Bitterfeld-Wolfen (DE); Zwarg, Steffen, 06766 Bitterfeld-Wolfen (DE); Schwerin, Malte, 06766 Bitterfeld-Wolfen (DE); Trommer, Martin, 06766 Bitterfeld-Wolfen (DE)
(74) Vertreter: Heraeus IP

(57) **Zusammenfassung**

Beschrieben wird ein Sootkörper aus synthetischem Quarzglas in der Form eines rohrförmigen Hohlkörpers, dadurch gekennzeichnet, dass der rohrförmige Hohlkörper eine Verdichtungsschicht aufweist, wobei die Verdichtungsschicht eine Dichte von 37 % bis 70% von konsolidiertem Quarzglas aufweist. Beschreiben wird darüber hinaus ein Verfahren zur Herstellung eines entsprechenden Quarzglases.

## Beschreibung

### TECHNISCHES GEBIET

Die vorliegende Erfindung betrifft gemäß einem ersten Aspekt der vorliegenden Erfindung ein Verfahren zur Herstellung von einem Sootkörper aus synthetischem Quarzglas sowie ein Verfahren zur Herstellung eines Quarzglaskörpers ausgehend von diesem Sootkörper. Gemäß einem zweiten Aspekt betrifft die vorliegende Erfindung sowohl einen Sootkörper als auch einen Quarzglaskörper, die durch die erfindungsgemäßen Verfahren erhältlich sind. Gemäß einem dritten Aspekt betrifft die vorliegende Erfindung einen Sootkörper in der Form eines rohrförmigen Hohlkörpers, wobei der rohrförmige Hohlkörper eine homogene Verteilung von Dotierungen, insbesondere von Fluor-, Chlor- und OH-Dotierungen, aufweist.

### TECHNISCHER HINTERGRUND

Zur Herstellung von synthetischem Quarzglas werden aus einer siliziumhaltigen Ausgangssubstanz in einem CVD-Verfahren durch Hydrolyse oder Oxidation SiO₂-Teilchen erzeugt und auf einem sich bewegenden Träger abgeschieden. Es kann dabei zwischen Außen- und Innenabscheideverfahren unterschieden werden. Bei Außenabscheideverfahren werden die SiO₂-Teilchen auf der Außenseite eines rotierenden Trägers aufgebracht. Als Beispiele für entsprechende Außenabscheideverfahren seien das so genannte OVD-Verfahren (Outside-Vapour-Phase-Deposition), das VAD-Verfahren (Vapour-Phase-Axial-Deposition) oder das PECVD-Verfahren (Plasma-Enhanced-Chemical-Vapour-Deposition) genannt. Als bekanntestes Beispiel für ein Innenabscheideverfahren ist das MCVD-Verfahren (Modified-Chemical-Vapour-Deposition) zu nennen, bei dem auf der Innenwandung eines von außen erhitzten Rohres SiO₂-Teilchen abgeschieden werden.

Bei hinreichend hoher Temperatur im Bereich der Trägeroberfläche kommt es zu einem unmittelbaren Verglasen der SiO₂-Partikel, was auch als "Direktverglasen" bekannt ist.

Im Unterschied dazu ist beim so genannten "Sootverfahren" die Temperatur beim Abscheiden der SiO₂-Partikel so niedrig, dass eine poröse SiO₂-Sootschicht erhalten wird, die in einem separaten Verfahrensschritt zu transparentem Quarzglas gesintert wird.

Sowohl das Direktverglasen als auch das Sootverfahren führen zu einem dichten, transparenten, hochreinen, synthetischen Quarzglas.

Im Rahmen der Sootverfahren zur Herstellung von Quarzglaszylindern wird somit zunächst ein poröser Sootkörper bei Temperaturen unterhalb der Sintertemperatur hergestellt und im Anschluss daran verglast. Das Sinterverfahren eignet sich insbesondere zur Herstellung von synthetischem Quarzglas, das zusätzlich dotiert ist. Die entsprechende Dotierung des synthetischen Quarzglases kann im Rahmen des Sootverfahrens durch entsprechende chemische Behandlung des porösen Sootkörpers erfolgen. Danach wird der Sootkörper in einem Ofen im Vakuum klargesintert. Dabei kann es allerdings zu einer Ausdiffusion von gasförmigen Komponenten, die wiederum zu einer radialen und axialen Inhomogenität im gesinterten Quarzglaskörper führt, kommen, so dass Dotierungen nicht homogen im Quarzglaskörper verteilt sind. Das sich dadurch einstellende Diffusionsprofil kann je nach Anwendungsgebiet für das resultierende Produkt nachteilig sein.

EP 2 497 755 A offenbart ein Verfahren zur Herstellung von Fluor-dotierten Fasern in einem Sinterprozess, wobei beim Verfahrensschritt des Verglasens des Sootkörpers einem Ausdiffundieren der Fluor-Dotierung dadurch entgegengewirkt wird, dass beim Verglasen eine Fluor-haltige Atmosphäre verwendet wird.

DE 10 2009 024 267 A offenbart ein Verfahren zur Herstellung von einem synthetischen Quarzglas, bei welchem ein zylinderförmiger SiO₂-Sootkörper, der einen Innenbereich und mindestens eine den Innenbereich umgebende freie Zylindermantelfläche aufweist, thermisch getrocknet und verglast wird. Vor dem Verglasen wird der Sootkörper einem Homogenisierungsverfahren unterzogen, bei welchem eine Versiegelungsschicht auf der äußeren Mantelfläche bei einer Verdichtungstemperatur erzeugt wird, die den Innenbereich nach außen abdichtet.

Aus DE 10 2008 059 400 A ist ein Verfahren zur Herstellung von Quarzglaskörpern bekannt, bei welchem vor dem Verdichtungsprozess die zylinderförmige Außenseite des Formkörpers unter Belassung eines offenporigen Formkörper-Innenbereichs mit einer gasdichten Versiegelungsschicht versehen wird, und der mit der gasdichten Versiegelungsschicht versehene offenporige Formkörper-Innenbereich einer Konditionierungsbehandlung unterzogen wird. Daher ist aus DE 10 2008 059 400 A bekannt, dass der Außenmantel eines Sootkörpers mit einer Versiegelungsschicht versehen wird. Hierzu wird die zylinderförmige Außenseite des Formkörpers nach der Herstellung des Sootkörpers verdichtet. Bei einer ersten Verfahrensvariante ist vorgesehen, dass die Versiegelungsschicht erzeugt wird, indem die Formkörper-Außenseite thermisch verdichtet wird. Dabei wird die zylinderförmige Außenseite des porösen Sootkörpers so hoch erhitzt, dass die SiO₂-Teilchen dichtsintern, wodurch sich eine gasdichte Oberflächenschicht ausbildet. Alternativ oder ergänzend zu einer thermischen Verdichtung der Außenseite des Formkörpers kann in einer zweiten Verfahrensvariante die Versiegelungsschicht erzeugt werden, indem auf der Sootkörper-Außenseite durch Abscheiden und Verglasen von SiO₂-Teilchen eine gasdichte Oberflächenbeschichtung ausgebildet wird. Im Fall, dass der Sootkörper in Rohrform mit poröser Innenwandung vorliegt, bleibt diese weiterhin porös und gasdurchlässig.

US 4,643,751 beschreibt ein Verfahren zur Herstellung eines optischen Wellenleiters, umfassend das Aufbringen einer Schicht aus teilchenförmigem SiO₂ auf ein zylindrisches Siliziumdioxid-Substrat, Positionieren des Siliziumdioxid-Substrats mit dem teilchenförmigem SiO₂ bedeckten Siliziumsubstrat in ein Schutzrohr aus Quarzglas, Erhitzen des Quarzglas-Schutzrohrs und des darin enthaltenen Substrats und Durchleiten eines Fluor-enthaltendes Gas durch das Rohr, um Fluor in das teilchenförmige Siliziumdioxid einzudiffundieren. Damit soll das Fluor nicht in den Kernbereich des Sootkörpers eindiffundieren. Die vorgeschlagene Maßnahme, die eine Eindiffusion des Fluors in den Kern verhindern soll, ist die vorherige Verdichtung des Kernsootkörpers zu einem Substratsilika, bevor mit dem Fluor-haltigem Gas dotiert wird.

US 2002/073740 A beschreibt ein Verfahren zur Herstellung eines SiO₂-Sootkörpers, bei welchem während des Abscheidungsschritts mindestens eine Barriereschicht in der Rußvorform gebildet wird. Die Barriereschicht ist vorzugsweise eine dünne Schicht aus verglastem Glas. Die Barriereschicht dient dazu, die Migration von Dotierstoffen zwischen einzelnen Segmenten der Rußvorform, beispielsweise zwischen einem ersten und einem zweiten ringförmigen Segment, zu reduzieren. Die hier beschriebene Barriereschicht ist vollständig verglast, was technisch nachteilig ist, da eine komplett verglaste Schicht durch die in der finalen Verglasung entstehenden Spannungen zum Reißen des verglasten Zylinders führen kann.

Das Problem des sich ausbildenden Diffusionsprofil von Dotierungen ergibt sich insbesondere bei einer Verfahrensweise, bei welchen zunächst ein poröser Sootkörper hergestellt, dieser im Anschluss bei Temperaturen unterhalb der Sintertemperatur getrocknet, dann gegebenenfalls dotiert und abschließend klargesintert wird. In dem letzten Verfahrensschritt des Klarsinterns kommt es nämlich zu einem Ausdiffundieren von gasförmigen Komponenten, was wiederum zu einer radialen und axialen Inhomogenität des Dotierstoffes im gesinterten Quarzglaskörper führt. Das sich dadurch einstellende Diffusionsprofil kann je nach Anwendung des Quarzglasmaterials nachteilig sein.

Beispielsweise stören im Fall von einer Fluordotierung bei der späteren Verwendung des Quarzglaszylinders bzw. daraus hergestellter Rohre als Teil einer Faservorform die resultierenden Inhomogenitäten, da eine möglichst gleichmäßige Fluorverteilung insbesondere im kernnahen Bereich für die Lichtleitereigenschaften benötigt wird.

Ausgehend von diesem Stand der Technik ergibt sich für die vorliegende Erfindung die Aufgabe, ein Verfahren zur Herstellung von einem Sootkörper und einem Quarzglaskörper bereitzustellen, wobei der Sootkörper und der Quarzglaskörper im Wesentlichen keine Inhomogenitäten von Dotierstoffen, wie Fluor und Chlor, und OH aufweist. Das anzustrebende Verfahren soll möglichst einfach und kostengünstig durchzuführen sein und ein Ausdiffundieren von Gasen, beispielsweise Fluor, Chlor oder OH, vermeiden. Insbesondere soll der resultierende Quarzglaskörper eine möglichst gleichmäßige Verteilung an Dotierstoffen, insbesondere an den Dotierstoffen Chlor und Fluor, sowie an OH aufweisen. Ein Ausdiffundieren von OH erfolgt dabei dergestalt, dass zwei OH-Gruppen des Ausgangsmaterials unter Ausbildung einer Si-O-Si-Bindung als Wasser (H₂O) ausdiffundieren.

Des Weiteren soll der resultierende Quarzglaskörper vorzugsweise keine oder wenig Eindiffusion aufweisen, die zu ungewünschten Reaktionen führen können. Hierzu zählt beispielsweise die Reduktion von SiO₂ durch CO unter Ausbildung von Sauerstoff-Defektzentren im Sootkörper durch Sauerstoffmangel.

### DEFINITIONEN

Im Rahmen der vorliegenden Erfindung wird unter einem Sootkörper ein poröser, noch nicht vollständig verglaster Körper aus SiO₂-Teilchen verstanden, der auf einem Träger aus durch Pyrolyse oder durch Hydrolyse gebildeten SiO₂-Partikeln abgeschieden wird.

Unter einem Sootkörper werden im Rahmen der vorliegenden Erfindung ferner alle porösen Sootkörper verstanden, die zu mindestens 80 % aus reinem SiO₂ oder Kieselgläsern bestehen und der Restanteil aus einem weiteren Metalloxid besteht. Das weitere Metalloxid kann unter anderem ein Ti- und/oder Ceroxid sein. Insbesondere kann es sich im Rahmen der vorliegenden Erfindung um einen Sootkörper handeln, der ein TiO₂-Gehalt von 4 bis 12 Gew.-%, weiter bevorzugt 5 bis 11 Gew.-%, noch weitern bevorzugt 6 bis 10 Gew.-%, enthält und die verbleibende Menge SiO₂ entspricht.

Im Rahmen der vorliegenden Erfindung wird unter einem Quarzglaskörper ein im Wesentlichen vollständig verglaster Körper aus SiO₂-Teilchen verstanden, der durch Verglasung eines erfindungsgemäßen Sootkörpers erhalten wird.

### ZUSAMMENFASSUNG

Die vorstehend beschriebenen Aufgaben werden im Rahmen der vorliegenden Erfindung vorzugsweise durch ein Verfahren zur Herstellung eines Quarzglaskörpers gelöst. Das erfindungsgemäße Verfahren ist dadurch gekennzeichnet, dass im Verfahren zunächst ein spezieller Sootkörpers als Zwischenprodukt erzeugt wird, der gegebenenfalls einer Dotierung unterworfen wird, und anschließend durch Verglasung in einen Quarzglaskörper transformiert wird.

Weiterer Gegenstand der vorliegenden Erfindung ist auch der spezielle Sootkörper, der in dem erfindungsgemäßen Verfahren als Zwischenprodukt erhalten werden kann, und der hieraus durch Verglasung resultierende Quarzglaskörper.

In einem ersten Aspekt betrifft die vorliegende Erfindung somit ein Verfahren zur Herstellung eines SiO₂-Sootkörpers, bei welchem ein rohrförmiger Hohlkörper so abgeschieden wird, dass im Bereich der Innenseite des rohrförmigen Hohlkörpers eine erste Verdichtungsschicht aus SiO₂-Teilchen gebildet wird, die eine Dichte von 37 % bis 70 %, weiter bevorzugt 45 bis 65 %, noch weiter bevorzugt 50 bis 60 %, jeweils bezogen auf vollständig konsolidiertes Quarzglas, aufweist.

Diese erste Verdichtungsschicht liegt vorzugsweise in einem Bereich radial von innen in einer Zone zwischen 0 bis 15 mm.

Durch die Ausbildung einer entsprechenden ersten Verdichtungsschicht im Bereich der Innenseite des rohrförmigen Hohlkörpers des Sootkörpers kann ein Ausdiffundieren von Dotierungen, wie Fluor oder Chlor, aber auch von OH, zur Zylinderinnenseite während der weiteren Verwendung des Sootkörpers, also insbesondere beim Trocknen, Dotieren und Verglasen des Sootkörpers zu einem Quarzglaskörper, verhindert bzw. reduziert werden. Die erste Verdichtungsschicht ist im Sinne der vorliegenden Erfindung eine poröse Diffusionsbarriere.

Die Porösität der Diffusionsbarriere beträgt vorzugsweise 30 bis 67 %, weiter bevorzugt 35 bis Im Fall von einer Fluordotierung stört bei der späteren Verwendung des Quarzglaszylinders bzw. daraus hergestellter Rohre als Teil einer Faservorform die resultierenden Inhomogenitäten, da eine möglichst gleichmäßige Fluorverteilung insbesondere im kernnahen Bereich für die Lichtleitereigenschaften benötigt wird. Diese erfindungsgemäß vorgesehene erste Verdichtungsschicht kann durch entsprechende Verfahrensgestaltung bei der Herstellung des Sootkörpers als Zwischenprodukt in dem Verfahren zur Herstellung des Quarzglaskörpers erhalten werden. Geeignete Verfahrensgestaltungen zur Ausbildung der ersten Verdichtungsschicht sind beispielsweise durch die Anpassung der Menge der Brennermedien, insbesondere des Brennergases, der Anpassung des Bewegungsablaufs des Sootkörpers bei seiner Herstellung, und/oder die Verwendung einer größeren Anzahl an Brennern gegeben.

Im Rahmen des erfindungsgemäßen Verfahrens zur Herstellung von Quarzglaskörpern, insbesondere von Quarzglaszylindern, wird somit zunächst ein poröser Sootkörper bei Temperaturen unterhalb der Sintertemperatur hergestellt und im Anschluss an dessen Herstellung üblicherweise verglast. Sollten Dotierungen in dem resultierenden Quarzglaskörper erwünscht sein, werden diese üblicherweise nach Herstellung des Sootkörper vor dessen Verglasung in das Material des Sootkörpers eingeführt. Die vorliegende Erfindung fokussiert daher auch auf einen durch ein Sootverfahren erhältlichen Sootkörper, der in nachgelagerten Verfahrensschritten gegebenenfalls zunächst einer Dotierung und anschließend einem Sinterverfahren zur Verglasung unterworfen wird.

Die erfindungsgemäßen Sootkörper werden üblicherweise auf einem Träger abgeschieden und weisen daher die geometrische Form eines rohrförmigen Hohlkörpers auf. Der Begriff eines rohrförmigen Hohlzylinders wird synonym mit dem Begriff eines hohlförmigen Zylinders verwendet.

Durch die Verwendung einer erfindungsgemäßen Verdichtungsschicht in dem Sootkörper kann bei dessen nachfolgender Verglasung eine Ausdiffusion von gasförmigen Komponenten, die zu radialen und axialen Inhomogenitäten im gesinterten Quarzglaskörper führen, vermieden oder zumindest reduziert werden.

Ein Ausdiffusion von gasförmigen Komponenten aus dem Sootkörper bei dessen Verglasung kann insbesondere dann zu Nachteilen führen, wenn der Sootkörper während oder nach dessen Bildung mit Fremdmaterialien dotiert wird.

Das erfindungsgemäße Verfahren, welches im Folgenden noch weitergehend beschrieben wird, ist einfach und kostengünstig durchzuführen und verhindert im Wesentlichen ein Ausdiffundieren von Dotierstoffen, beispielsweise Gasen, insbesondere Fluor, Chlor und/oder OH, aus dem Sootkörper während seiner Verglasung. Insbesondere weist der resultierende verglaste Sootkörper eine möglichst gleichmäßige Verteilung an Dotierstoffen, beispielsweise von Chlor und Fluor, und von OH auf, da durch die Verdichtungsschicht ein unkontrolliertes Ausdiffundieren der Dotierstoffe oder von OH vermieden oder verringert werden kann.

### DETAILLIERTE BESCHREIBUNG DER ERFINDUNG

### Verfahren zur Herstellung eines erfindungsgemäßes SiO₂-Sootkörpers

Die vorliegende Erfindung betrifft in einem ersten Aspekt ein Verfahren zur Herstellung eines SiO₂-Sootkörpers, gekennzeichnet durch die nachfolgenden Verfahrensschritte:
a. Verdampfen eines siliziumhaltigen Einsatzmaterials unter Bildung eines Einsatzmaterialdampfes;
   b. Zuführen des aus Verfahrensschritt a. resultierenden Einsatzmaterialdampfes zu einer Reaktionszone, in der das Einsatzmaterial durch Pyrolyse oder durch Hydrolyse zu SiO₂-Partikeln umgesetzt wird; und
   c. Abscheiden der aus Verfahrensschritt b. resultierenden SiO₂-Teilchen auf einer Ablagerungsfläche unter Ausbildung von einem Sootkörper als rohrförmiger Hohlkörper,
wobei im Verfahrensschritt c. der rohrförmige Hohlkörper des SiO₂-Sootkörpers so abgeschieden wird, dass im Bereich der Innenseite des rohrförmigen Hohlkörpers eine erste Verdichtungsschicht aus SiO₂-Teilchen gebildet wird, die eine Dichte von 37 % bis 70 %, weiter bevorzugt 45 bis 65 %, noch weiter bevorzugt 50 bis 60 %, jeweils bezogen auf vollständig konsolidiertes Quarzglas, aufweist.

Die erste Verdichtungsschicht wird vorzugsweise durch die zur Ausbildung der Verdichtungsschicht angewendeten Temperatur bei der Abscheidung der SiO₂-Sootteilchen gebildet, so dass durch die vorgenannten Maßnahmen der Anpassung der Menge der Brennermedien sowie der Anpassung des Bewegungsablaufs des Sootkörpers die Bereiche der Verdichtungsschicht einer höheren Temperatureinwirkung ausgesetzt werden als die übrigen Bereiche des Sootkörpers. Hierdurch kommt es zu einer Verdichtung der abgeschiedenen SiO₂-Sootteilchen und Ausbildung der porösen Diffusionsbarriere.

Das erfindungsgemäße Verfahren ist daher insbesondere dadurch gekennzeichnet, dass während des Sootaufbaus eine Verdichtungsschicht im Sootkörper durch Anpassung der Flammenstöchiometrie, um die Temperatur lokal zu erhöhen, und/oder eine Verdichtungsschicht im Sootkörper durch die Verlangsamung der Sootkörperbewegung, um die Aufenthaltsdauer eines Bereichs der Oberfläche des Sootkörpers im Flammenauftreffpunkt zu erhöhen, und/oder eine Verdichtungsschicht im Sootkörper durch die Verwendung einer größeren Anzahl an Brennern erzeugt wird.

Die genau anzuwendende Flammenstöchiometrie sowie die genau anzuwendende Verlangsamung der Sootkörperbewegung hängt jeweils vom operativen Aufbau des Herstellungsverfahrens ab und kann durch den Fachmann anhand seines Wissens geeignet ausgewählt werden.

Im Rahmen der vorliegenden Erfindung wird die vorgesehene erste Verdichtungsschritt im Verfahrensschritt c. vorzugsweise auf der Innenseite des als rohrförmigen Hohlkörpers ausgebildeten Sootkörpers erzeugt, so dass in einem nachgelagerten Verfahrensschritt eine Dotierung weiterhin über die offenporige Außenoberfläche des vorzugsweise als rohrförmigen Hohlzylinders ausgebildeten Sootkörpers erfolgen kann.

Im Rahmen der vorliegenden Erfindung ist es jedoch nicht zwingend erforderlich, dass die erste Verdichtungsschicht die innerste Schicht des erfindungsgemäß herzustellenden Sootkörpers darstellt, sofern die Verdichtungsschicht radial näher zu der Innenseite des zylinderförmigen Hohlkörpers als zu der Außenseite des zylinderförmigen Hohlkörpers angeordnet ist. Insbesondere kann es von Vorteil sein, wenn die Verdichtungsschicht von der Innenschicht des hohlförmigen Hohlkörpers radial nach außen die zweite diskrete Schicht darstellt und im Verfahrensschritt c. auf der Ablagerungsoberfläche zunächst eine erste Sootschicht aus SiO₂-Teilchen aufgebaut wird, welche eine Dichte von 10% bis 40%, weiter bevorzugt 15% bis 35 %, noch weiter bevorzugt 20 bis 30 %, jeweils bezogen auf vollständig konsolidiertes Quarzglas, aufweist. Diese erste Sootschicht stellt keine effiziente Diffusionsbarriere für Dotierungen dar, dient aber dazu, den Sootkörper vereinfacht von der Ablagerungsfläche zu entfernen und Beschädigungen der Innenoberfläche des Sootkörpers zu vermeiden.

Daher betrifft die vorliegende Erfindung auch ein Verfahren zur Herstellung eines SiO₂-Sootkörpers, gekennzeichnet durch die nachfolgenden Verfahrensschritte:
a. Verdampfen eines siliziumhaltigen Einsatzmaterials unter Bildung eines Einsatzmaterialdampfes;
b. Zuführen des aus Verfahrensschritt a. resultierenden Einsatzmaterialdampfes zu einer Reaktionszone, in der das Einsatzmaterial durch Pyrolyse oder durch Hydrolyse zu SiO₂-Partikeln umgesetzt wird; und
c. Abscheiden der aus Verfahrensschritt b. resultierenden SiO₂-Teilchen auf einer Ablagerungsfläche unter Ausbildung von einem Sootkörper als rohrförmiger Hohlkörper,
wobei im Verfahrensschritt c. der rohrförmige Hohlkörper des SiO₂-Sootkörpers so abgeschieden wird, dass auf der Ablagerungsfläche
c.1 zunächst eine erste Sootschicht aus SiO₂-Teilchen aufgebaut wird, welche eine Dichte von 10% bis 40%, weiter bevorzugt 15% bis 35 %, noch weiter bevorzugt 20 bis 30 %, jeweils bezogen auf vollständig konsolidiertes Quarzglas, aufweist, und
c.2 danach auf der ersten Sootschicht aus SiO₂-Teilchen, radial nach außen gerichtet, eine erste Verdichtungsschicht aus SiO₂-Teilchen aufgebaut wird, die eine Dichte von 37 % bis 70 %, weiter bevorzugt 45 bis 65 %, noch weiter bevorzugt 50 bis 60 %, jeweils bezogen auf vollständig konsolidiertes Quarzglas, aufweist.

Die Dichte dieser ersten Sootschicht, die auf der Ablagerungsoberfläche abgeschieden wird, ist somit geringer als die Dichte der ersten Verdichtungsschicht.

Die Steuerung der Ausbildung einer ersten Sootschicht und einer ersten Verdichtungsschicht kann im Rahmen dieses erfindungsgemäßen Verfahrens durch die vorstehend bereits erläuterten Verfahrensgestaltungen der Variation der Abscheidungsparameter (Temperatur und Dauer) realisiert werden.

Bei der Ablagerungsoberfläche kann es sich um eine Oberfläche eines Alsinth-, SiC- oder SiSiC-Rohres handeln.

### Erfindungsgemäßer SiO₂-Sootkörpers

Die vorliegende Erfindung betrifft ferner einen SiO₂-Sootkörper, welcher gemäß dem vorbeschriebenen Verfahren erhältlich ist.

Des Weiteren betrifft die vorliegende Erfindung einen SiO₂-Sootkörper, der eine erste Verdichtungsschicht aus SiO₂-Teilchen aufweist, die eine Dichte von 37 % bis 70 %, weiter bevorzugt 45 bis 65 %, noch weiter bevorzugt 50 bis 60 %, jeweils bezogen auf vollständig konsolidiertes Quarzglas, aufweist.

Der erfindungsgemäße SiO₂-Sootkörper weist die erste Verdichtungsschicht vorzugsweise radial näher zu der Innenseite des zylinderförmigen Hohlkörpers als zu der Außenseite des zylinderförmigen Hohlkörpers angeordnet auf.

Der erfindungsgemäße SiO₂-Sootkörper weist die erste Verdichtungsschicht weiter bevorzugt radial von Innen nach Außen des rohrförmigen Hohlkörpers als zweite diskrete Schicht auf, während die Innere Schicht des rohrförmigen Hohlkörpers durch eine erste SiO₂-Sootschicht gebildet wird, welche eine Dichte von 10% bis 40%, weiter bevorzugt 15% bis 35 %, noch weiter bevorzugt 20 bis 30 %, jeweils bezogen auf vollständig konsolidiertes Quarzglas, aufweist.

Daher ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 10 % bis 40 %, bezogen auf konsolidiertes Quarzglas, aufweist, und
- sich an die innerste diskrete Schicht radial nach außen eine erste Verdichtungsschicht anschließt, die eine Dichte von 37 bis 70 %, bezogen auf konsolidiertes Quarzglas, aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 15 % bis 35 %, bezogen auf konsolidiertes Quarzglas, aufweist, und
- sich an die innerste diskrete Schicht radial nach außen eine erste Verdichtungsschicht anschließt, die eine Dichte von 45 bis 65 %, bezogen auf konsolidiertes Quarzglas, aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist, und
- sich an die innerste diskrete Schicht radial nach außen eine erste Verdichtungsschicht anschließt, die eine Dichte von 50 bis 60 %, bezogen auf konsolidiertes Quarzglas, aufweist.

Im Rahmen der vorliegenden Erfindung wird unter einer unmittelbaren Anordnung der ersten Verdichtungsschicht um eine (innere) erste Sootschicht verstanden, dass sich keine weitere diskrete Schicht zwischen der ersten Verdichtungsschicht und der inneren (ersten) Sootschicht befindet. Die Verdichtungsschicht und die innere Sootschicht weisen dann die vorstehend beschriebenen bevorzugten Dichtewerte auf.

In dem Fall einer von der ersten Verdichtungsschicht abweichenden inneren Sootschicht beträgt die Schichtdicke der inneren ersten Sootschicht vorzugsweise 0,5 bis 10 mm, weiter bevorzugt 1 mm bis 5 mm, noch weiter bevorzugt 2 bis 3 mm.

Daher ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 10 % bis 40 %, bezogen auf konsolidiertes Quarzglas, aufweist,
- die erste Sootschicht eine Schichtdicke von 0,5 bis 10 mm aufweist, und
- sich an die innerste diskrete Schicht radial nach außen eine erste Verdichtungsschicht anschließt, die eine Dichte von 37 bis 70 %, bezogen auf konsolidiertes Quarzglas, aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 15 % bis 35 %, bezogen auf konsolidiertes Quarzglas, aufweist,
- die erste Sootschicht eine Schichtdicke von 1 mm bis 5 mm, aufweist, und
- sich an die innerste diskrete Schicht radial nach außen eine erste Verdichtungsschicht anschließt, die eine Dichte von 45 bis 65 %, bezogen auf konsolidiertes Quarzglas, aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 2 mm bis 3 mm, aufweist, und
- sich an die innerste diskrete Schicht radial nach außen eine erste Verdichtungsschicht anschließt, die eine Dichte von 50 bis 60 %, bezogen auf konsolidiertes Quarzglas, aufweist.

In einer weiteren Ausgestaltung des erfindungsgemäßen Sootkörpers kann sich des Weiteren radial nach außen unmittelbar an die Verdichtungsschicht eine weitere diskrete zweite Sootschicht anschließen. Diese zweite Sootschicht kann eine Dichte von 15 % bis 35 %, weiter bevorzugt 20 % bis 32 %, noch weiter bevorzugt 25 bis 29 %, jeweils bezogen auf konsolidiertes Quarzglas, aufweisen.

Daher ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 10 % bis 40 %, bezogen auf konsolidiertes Quarzglas, aufweist,
- die erste Sootschicht eine Schichtdicke von 0,5 bis 10 mm aufweist,
- sich an die innerste diskrete Schicht radial nach außen eine erste Verdichtungsschicht anschließt, die eine Dichte von 37 bis 70 %, bezogen auf konsolidiertes Quarzglas, aufweist, und
- sich an die Verdichtungsschicht radial nach außen eine zweite Sootschicht anschließt, deren Dichte 15 % bis 35 %, bezogen auf konsolidiertes Quarzglas, beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 15 % bis 35 %, bezogen auf konsolidiertes Quarzglas, aufweist,
- die erste Sootschicht eine Schichtdicke von 1 mm bis 5 mm, aufweist,
- sich an die innerste diskrete Schicht radial nach außen eine erste Verdichtungsschicht anschließt, die eine Dichte von 45 bis 65 %, bezogen auf konsolidiertes Quarzglas, aufweist, und
- sich an die Verdichtungsschicht radial nach außen eine zweite Sootschicht anschließt, deren Dichte 20 % bis 32 %, bezogen auf konsolidiertes Quarzglas, beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 2 mm bis 3 mm, aufweist,
- sich an die innerste diskrete Schicht radial nach außen eine erste Verdichtungsschicht anschließt, die eine Dichte von 50 bis 60 %, bezogen auf konsolidiertes Quarzglas, aufweist, und
- sich an die Verdichtungsschicht radial nach außen eine zweite Sootschicht anschließt, deren Dichte 25 bis 29 %, bezogen auf konsolidiertes Quarzglas, beträgt.

Die zweite Sootschicht kann eine Schichtdicke von 100 bis 190 mm, weiter bevorzugt 115 bis 180 mm, noch weiter bevorzugt 130 bis 170 mm aufweisen.

Daher ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 10 % bis 40 %, bezogen auf konsolidiertes Quarzglas, aufweist,
- die erste Sootschicht eine Schichtdicke von 0,5 bis 10 mm aufweist,
- sich an die innerste diskrete Schicht radial nach außen eine erste Verdichtungsschicht anschließt, die eine Dichte von 37 bis 70 %, bezogen auf konsolidiertes Quarzglas, aufweist,
- sich an die Verdichtungsschicht radial nach außen eine zweite Sootschicht anschließt, deren Dichte 15 % bis 35 %, bezogen auf konsolidiertes Quarzglas, beträgt, und
- die zweite Sootschicht eine Schichtdicke von 100 bis 190 mm aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 15 % bis 35 %, bezogen auf konsolidiertes Quarzglas, aufweist,
- die erste Sootschicht eine Schichtdicke von 1 mm bis 5 mm, aufweist,
- sich an die innerste diskrete Schicht radial nach außen eine erste Verdichtungsschicht anschließt, die eine Dichte von 45 bis 65 %, bezogen auf konsolidiertes Quarzglas, aufweist,
- sich an die Verdichtungsschicht radial nach außen eine zweite Sootschicht anschließt, deren Dichte 20 % bis 32 %, bezogen auf konsolidiertes Quarzglas, beträgt. Und
- die zweite Sootschicht eine Schichtdicke von 115 bis 180 mm aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 2 mm bis 3 mm, aufweist,
- sich an die innerste diskrete Schicht radial nach außen eine erste Verdichtungsschicht anschließt, die eine Dichte von 50 bis 60 %, bezogen auf konsolidiertes Quarzglas, aufweist,
- sich an die Verdichtungsschicht radial nach außen eine zweite Sootschicht anschließt, deren Dichte 25 bis 29 %, bezogen auf konsolidiertes Quarzglas, beträgt, und
- die zweite Sootschicht eine Schichtdicke von 130 bis 170 mm aufweist.

Im Rahmen der vorliegenden Erfindung ist es zusätzlich von Vorteil, wenn zusätzlich zu einer ersten Verdichtungsschicht an der Innenfläche des rohrförmigen Hohlkörpers auch im Bereich der Außenfläche des rohrförmigen Hohlkörpers eine zweite Verdichtungsschicht vorliegt. Durch diese zweite Verdichtungsschicht kann gewährleistet werden, dass mögliche Dotierungen nicht oder nur in geringerem Umfang über die Außenfläche des rohrförmigen Hohlkörpers während des anschließenden Verfahrensschritts des Verglasens entweichen können.

In einer weiteren bevorzugten Ausgestaltung weist diese zweite Verdichtungsschicht aus SiO₂-Teilchen eine Dichte von 37 % bis 70 %, weiter bevorzugt 45 bis 65 %, noch weiter bevorzugt 50 bis 60 %, jeweils bezogen auf vollständig konsolidiertes Quarzglas, auf. Hierdurch wird neben dem Verhindern des Ausdiffundierens von möglichen Dotierstoffen über die Außenfläche des rohrförmigen Hohlkörpers gleichzeitig eine höhere Stabilität des resultierenden Hohlzylinders gewährleistet, was eine weitere Manipulation des Hohlkörpers zu Dotierungszwecken und/oder zum Verglasen vereinfacht.

Die Dichte der zweiten Verdichtungsschicht kann von der Dichte der ersten Verdichtungsschicht abweichen.

Im Rahmen der vorliegenden Erfindung wird die vorstehend beschriebene Verdichtungsschicht im Innenbereich des rohrförmigen Hohlkörpers insbesondere dann ausgebildet, wenn eine nachgelagerte Dotierung des rohrförmigen Hohlkörpers erfolgen soll und eine nach der Dotierung erfolgende Verglasung in der Regel von außen nach innen erfolgt, so dass der dotierte Hohlkörpers außen schnell abgedichtet wird und eine Verglasung innen jedoch zeitlich nachgelagert erfolgt, und dort die Dotierungen wesentlich länger entweichen können. Daher ist eine Verdichtungsschicht an der Innenfläche des rohrförmigen Hohlkörpers wichtiger als an der Außenfläche.

Die jeweiligen Verdichtungsschichten dienen jedoch nicht nur dazu, die Dotierungen in dem Sootkörper zu fixieren und deren homogene Verteilung zu ermöglichen, sie dienen auch dazu, eine Eindiffusion von Gasen, die zu ungewünschten Reaktionen in dem Sootkörper führen können, wie z.B. Reduktion von SiO₂ durch Kohlenmonoxid (CO) unter Ausbildung von Defektzentren mit O-Mangel, zu reduzieren oder sogar zu vermeiden.

Im Rahmen der vorliegenden Erfindung wird unter einem konsolidierten Quarzglas ein vollverglastes Quarzglas mit einer Dichte von 2,21 g/cm³ verstanden und diese Dichte wird als Referenz für die prozentualen Dichteangeben in den Verdichtungsschicht(en) und Sootschicht(en) angenommen.

Im Folgenden wird im Singular von der Verdichtungsschicht gesprochen, wobei sich die nachfolgenden Angaben sowohl auf die erste Verdichtungsschicht im Bereich der Innenseite des rohrförmigen Hohlkörpers sowie auf die zweite Verdichtungsschicht an der Außenseite des rohrförmigen Hohlkörpers beziehen.

Die Dichte der Verdichtungsschicht in dem Sootkörper ist vorzugsweise um mindestens 5 %, weiter bevorzugt mindestens 10 %, noch weiter bevorzugt mindestens 20 %, größer ist als die mittlere Dichte des synthetischen Quarzglases in dem Sootkörper außerhalb der Verdichtungsschicht. Im Fall einer entsprechenden Ausgestaltung der Dichte der Verdichtungsschicht im Verhältnis zu der mittleren Dichte des Sootkörpers außerhalb der Verdichtungsschicht lassen sich die vorstehenden genannten Aufgaben der vorliegenden Erfindung insbesondere lösen.

Die Verdichtungsschicht weist im Rahmen der vorliegenden Erfindung üblicherweise eine Schichtdicke von mindestens 0,1 mm, weiter bevorzugt mindestens 0,3 mm, noch weiter bevorzugt mindestens 0,5 mm, auf.

Die Verdichtungsschicht weist im Rahmen der vorliegenden Erfindung üblicherweise eine Schichtdicke von höchstens 20 mm, weiter bevorzugt höchstens 17 mm, noch weiter bevorzugt höchstens 15 mm, auf.

Insbesondere weist die Verdichtungsschicht im Rahmen der vorliegenden Erfindung eine Schichtdicke von 0,1 bis 20 mm, weiter bevorzugt 0,3 bis 17 mm, noch weiter bevorzugt 0,5 bis 15 mm, auf.

Darüber hinaus kann die Verdichtungsschicht eine Schichtdicke von 1 bis 10 mm, weiter bevorzugt 2 bis 8 mm, noch weiter bevorzugt 3 bis 7 mm, aufweisen.

Daher ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 10 % bis 40 %, bezogen auf konsolidiertes Quarzglas, aufweist,
- sich an die innerste diskrete Schicht radial nach außen eine erste Verdichtungsschicht anschließt, die eine Dichte von 37 bis 70 %, bezogen auf konsolidiertes Quarzglas, aufweist, und
- die Schichtdicke der ersten Verdichtungsschicht 0,1 bis 20 mm beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 15 % bis 35 %, bezogen auf konsolidiertes Quarzglas, aufweist,
- sich an die innerste diskrete Schicht radial nach außen eine erste Verdichtungsschicht anschließt, die eine Dichte von 45 bis 65 %, bezogen auf konsolidiertes Quarzglas, aufweist, und
- die Schichtdicke der ersten Verdichtungsschicht 0,3 bis 17 mm beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- sich an die innerste diskrete Schicht radial nach außen eine erste Verdichtungsschicht anschließt, die eine Dichte von 50 bis 60 %, bezogen auf konsolidiertes Quarzglas, aufweist, und
- die Schichtdicke der ersten Verdichtungsschicht 0,5 bis 15 mm beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- sich an die innerste diskrete Schicht radial nach außen eine erste Verdichtungsschicht anschließt, die eine Dichte von 50 bis 60 %, bezogen auf konsolidiertes Quarzglas, aufweist, und
- die Schichtdicke der ersten Verdichtungsschicht 1 bis 10 mm beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- sich an die innerste diskrete Schicht radial nach außen eine erste Verdichtungsschicht anschließt, die eine Dichte von 50 bis 60 %, bezogen auf konsolidiertes Quarzglas, aufweist, und
- die Schichtdicke der ersten Verdichtungsschicht 2 bis 8 mm beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- sich an die innerste diskrete Schicht radial nach außen eine erste Verdichtungsschicht anschließt, die eine Dichte von 50 bis 60 %, bezogen auf konsolidiertes Quarzglas, aufweist, und
- die Schichtdicke der ersten Verdichtungsschicht 3 bis 7 mm beträgt.

Daher ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 10 % bis 40 %, bezogen auf konsolidiertes Quarzglas, aufweist,
- die erste Sootschicht eine Schichtdicke von 0,5 bis 10 mm aufweist,
- sich an die innerste diskrete Schicht radial nach außen eine erste Verdichtungsschicht anschließt, die eine Dichte von 37 bis 70 %, bezogen auf konsolidiertes Quarzglas, aufweist, und
- die Schichtdicke der ersten Verdichtungsschicht 0,1 bis 20 mm beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 15 % bis 35 %, bezogen auf konsolidiertes Quarzglas, aufweist,
- die erste Sootschicht eine Schichtdicke von 0,5 bis 10 mm aufweist,
- sich an die innerste diskrete Schicht radial nach außen eine erste Verdichtungsschicht anschließt, die eine Dichte von 45 bis 65 %, bezogen auf konsolidiertes Quarzglas, aufweist, und
- die Schichtdicke der ersten Verdichtungsschicht 0,3 bis 17 mm beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 1 bis 5 mm aufweist,
- sich an die innerste diskrete Schicht radial nach außen eine erste Verdichtungsschicht anschließt, die eine Dichte von 50 bis 60 %, bezogen auf konsolidiertes Quarzglas, aufweist, und
- die Schichtdicke der ersten Verdichtungsschicht 0,5 bis 15 mm beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 1 bis 5 mm aufweist
- sich an die innerste diskrete Schicht radial nach außen eine erste Verdichtungsschicht anschließt, die eine Dichte von 50 bis 60 %, bezogen auf konsolidiertes Quarzglas, aufweist, und
- die Schichtdicke der ersten Verdichtungsschicht 1 bis 10 mm beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 2 bis 3 mm aufweist
- sich an die innerste diskrete Schicht radial nach außen eine erste Verdichtungsschicht anschließt, die eine Dichte von 50 bis 60 %, bezogen auf konsolidiertes Quarzglas, aufweist, und
- die Schichtdicke der ersten Verdichtungsschicht 2 bis 8 mm beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 2 bis 3 mm aufweist
- sich an die innerste diskrete Schicht radial nach außen eine erste Verdichtungsschicht anschließt, die eine Dichte von 50 bis 60 %, bezogen auf konsolidiertes Quarzglas, aufweist, und
- die Schichtdicke der ersten Verdichtungsschicht 3 bis 7 mm beträgt.

Daher ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 10 % bis 40 %, bezogen auf konsolidiertes Quarzglas, aufweist,
- die erste Sootschicht eine Schichtdicke von 0,5 bis 10 mm aufweist,
- sich an die innerste diskrete Schicht radial nach außen eine erste Verdichtungsschicht anschließt, die eine Dichte von 37 bis 70 %, bezogen auf konsolidiertes Quarzglas, aufweist,
- die Schichtdicke der ersten Verdichtungsschicht 0,1 bis 20 mm beträgt, und
- sich an die Verdichtungsschicht radial nach außen eine zweite Sootschicht anschließt, deren Dichte 15 % bis 35 %, bezogen auf konsolidiertes Quarzglas, beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 15 % bis 35 %, bezogen auf konsolidiertes Quarzglas, aufweist,
- die erste Sootschicht eine Schichtdicke von 0,5 bis 10 mm aufweist,
- sich an die innerste diskrete Schicht radial nach außen eine erste Verdichtungsschicht anschließt, die eine Dichte von 45 bis 65 %, bezogen auf konsolidiertes Quarzglas, aufweist,
- die Schichtdicke der ersten Verdichtungsschicht 0,3 bis 17 mm beträgt, und
- sich an die Verdichtungsschicht radial nach außen eine zweite Sootschicht anschließt, deren Dichte 15 % bis 35 %, bezogen auf konsolidiertes Quarzglas, beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 1 bis 5 mm aufweist,
- sich an die innerste diskrete Schicht radial nach außen eine erste Verdichtungsschicht anschließt, die eine Dichte von 50 bis 60 %, bezogen auf konsolidiertes Quarzglas, aufweist,
- die Schichtdicke der ersten Verdichtungsschicht 0,5 bis 15 mm beträgt, und
- sich an die Verdichtungsschicht radial nach außen eine zweite Sootschicht anschließt, deren Dichte 20 % bis 32 %, bezogen auf konsolidiertes Quarzglas, beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 1 bis 5 mm aufweist,
- sich an die innerste diskrete Schicht radial nach außen eine erste Verdichtungsschicht anschließt, die eine Dichte von 50 bis 60 %, bezogen auf konsolidiertes Quarzglas, aufweist,
- die Schichtdicke der ersten Verdichtungsschicht 1 bis 10 mm beträgt, und
- sich an die Verdichtungsschicht radial nach außen eine zweite Sootschicht anschließt, deren Dichte 20 % bis 32 %, bezogen auf konsolidiertes Quarzglas, beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 2 bis 3 mm aufweist,
- sich an die innerste diskrete Schicht radial nach außen eine erste Verdichtungsschicht anschließt, die eine Dichte von 50 bis 60 %, bezogen auf konsolidiertes Quarzglas, aufweist,
- die Schichtdicke der ersten Verdichtungsschicht 2 bis 8 mm beträgt, und
- sich an die Verdichtungsschicht radial nach außen eine zweite Sootschicht anschließt, deren Dichte 25 % bis 29 %, bezogen auf konsolidiertes Quarzglas, beträgt.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 2 bis 3 mm aufweist,
- sich an die innerste diskrete Schicht radial nach außen eine erste Verdichtungsschicht anschließt, die eine Dichte von 50 bis 60 %, bezogen auf konsolidiertes Quarzglas, aufweist,
- die Schichtdicke der ersten Verdichtungsschicht 3 bis 7 mm beträgt, und
- sich an die Verdichtungsschicht radial nach außen eine zweite Sootschicht anschließt, deren Dichte 25 % bis 29 %, bezogen auf konsolidiertes Quarzglas, beträgt.

Daher ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 10 % bis 40 %, bezogen auf konsolidiertes Quarzglas, aufweist,
- die erste Sootschicht eine Schichtdicke von 0,5 bis 10 mm aufweist,
- sich an die innerste diskrete Schicht radial nach außen eine erste Verdichtungsschicht anschließt, die eine Dichte von 37 bis 70 %, bezogen auf konsolidiertes Quarzglas, aufweist,
- die Schichtdicke der ersten Verdichtungsschicht 0,1 bis 20 mm beträgt,
- sich an die Verdichtungsschicht radial nach außen eine zweite Sootschicht anschließt, deren Dichte 15 % bis 35 %, bezogen auf konsolidiertes Quarzglas, beträgt, und
- die zweite Sootschicht eine Schichtdicke von 100 bis 190 mm aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 15 % bis 35 %, bezogen auf konsolidiertes Quarzglas, aufweist,
- die erste Sootschicht eine Schichtdicke von 0,5 bis 10 mm aufweist,
- sich an die innerste diskrete Schicht radial nach außen eine erste Verdichtungsschicht anschließt, die eine Dichte von 45 bis 65 %, bezogen auf konsolidiertes Quarzglas, aufweist,
- die Schichtdicke der ersten Verdichtungsschicht 0,3 bis 17 mm beträgt,
- sich an die Verdichtungsschicht radial nach außen eine zweite Sootschicht anschließt, deren Dichte 15 % bis 35 %, bezogen auf konsolidiertes Quarzglas, beträgt, und
- die zweite Sootschicht eine Schichtdicke von 100 bis 190 mm aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 1 bis 5 mm aufweist,
- sich an die innerste diskrete Schicht radial nach außen eine erste Verdichtungsschicht anschließt, die eine Dichte von 50 bis 60 %, bezogen auf konsolidiertes Quarzglas, aufweist,
- die Schichtdicke der ersten Verdichtungsschicht 0,5 bis 15 mm beträgt,
- sich an die Verdichtungsschicht radial nach außen eine zweite Sootschicht anschließt, deren Dichte 20 % bis 32 %, bezogen auf konsolidiertes Quarzglas, beträgt, und
- die zweite Sootschicht eine Schichtdicke von 115 bis 180 mm aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 1 bis 5 mm aufweist
- sich an die innerste diskrete Schicht radial nach außen eine erste Verdichtungsschicht anschließt, die eine Dichte von 50 bis 60 %, bezogen auf konsolidiertes Quarzglas, aufweist,
- die Schichtdicke der ersten Verdichtungsschicht 1 bis 10 mm beträgt,
- sich an die Verdichtungsschicht radial nach außen eine zweite Sootschicht anschließt, deren Dichte 20 % bis 32 %, bezogen auf konsolidiertes Quarzglas, beträgt, und
- die zweite Sootschicht eine Schichtdicke von 115 bis 180 mm aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 2 bis 3 mm aufweist
- sich an die innerste diskrete Schicht radial nach außen eine erste Verdichtungsschicht anschließt, die eine Dichte von 50 bis 60 %, bezogen auf konsolidiertes Quarzglas, aufweist,
- die Schichtdicke der ersten Verdichtungsschicht 2 bis 8 mm beträgt,
- sich an die Verdichtungsschicht radial nach außen eine zweite Sootschicht anschließt, deren Dichte 25 % bis 29 %, bezogen auf konsolidiertes Quarzglas, beträgt, und
- die zweite Sootschicht eine Schichtdicke von 130 bis 170 mm aufweist.

Ferner ist im Rahmen der vorliegenden Erfindung insbesondere ein Sootkörper von Vorteil, in welchem
- der Sootkörper in der Form eines rohrförmigen Hohlkörpers vorliegt,
- die innerste diskrete Schicht des Sootkörpers durch eine erste Sootschicht gebildet wird, welche eine Dichte von 20 % bis 30 %, bezogen auf konsolidiertes Quarzglas, aufweist,
- die erste Sootschicht eine Schichtdicke von 2 bis 3 mm aufweist
- sich an die innerste diskrete Schicht radial nach außen eine erste Verdichtungsschicht anschließt, die eine Dichte von 50 bis 60 %, bezogen auf konsolidiertes Quarzglas, aufweist,
- die Schichtdicke der ersten Verdichtungsschicht 3 bis 7 mm beträgt,
- sich an die Verdichtungsschicht radial nach außen eine zweite Sootschicht anschließt, deren Dichte 25 % bis 29 %, bezogen auf konsolidiertes Quarzglas, beträgt, und
- die zweite Sootschicht eine Schichtdicke von 130 bis 170 mm aufweist.

Die vorgenannten Schichtdicken der Verdichtungsschicht stellen einen Kompromiss dar; zum einen sollten die Schichtdicke nicht zu groß sein, da der Materialbereich der Verdichtungsschicht nicht dotiert wird und später ausgebohrt (entfernt) werden muss, wenn der verglaste Sootkörper bestimmten Anwendung zugeführt wird und andererseits muss die Schichtdicke ausreichend groß sein, damit die Verdichtungsschicht ihre Aufgabe als Barrierewirkung erfüllen kann.

Darüber hinaus ist es im Rahmen der vorliegenden Erfindung bevorzugt, wenn die Variation der Dicke der Verdichtungsschicht entlang der Rotationsachse des rohrförmigen Hohlkörpers maximal +/- 10%, vorzugsweise maximal +/- 5%, beträgt. Eine möglichst einheitliche Schichtdicke macht ein späteres Ausbohren der Verdichtungsschicht einfacher und führt zu einem geringeren Materialverlust an dotierten und verglastem Quarzmaterial.

Die Verdichtungsschichten und die Sootschichten des rohrförmigen Hohlzylinders unterschieden sind anhand ihrer wie vorstehend definierten Dichten.

Die Dichteverteilung wird im Rahmen der vorliegenden Erfindung, wie schon vorstehend erläutert, so erreicht, dass die Temperatur an der Sootkörperoberfläche bei der Ausbildung der jeweiligen entsprechend angepasst wird. Die Dichte des Sootkörpers ist sehr eng an die sogenannte Aufbautemperatur des Sootkörpers gekoppelt. Damit kann die Dichte des Sootkörpers unter anderem durch die nachfolgenden Verfahrensmaßnahmen, wie bereits ausgeführt, gesteuert werden:
1. Durch die Anpassung der Menge der Brennermedien, insbesondere des Brennergases; und/oder
2. durch die Anpassung des Bewegungsablaufs des Sootkörpers, d.h. wenn man den Körper langsamer bewegt, wird er heißer und/oder
3. durch die Anzahl der angeordneten Brenner in den einzelnen Bereichen, da durch eine höhere Anzahl an Brennern ein höherer Wäremeintrag auf die Oberfläche des Sootkörpers ausgewirkt werden kann.

Weitere Möglichkeiten, eine erste Verdichtungsschicht im Rahmen der vorliegenden Erfindung zu erzeugen, besteht darin, auf der Ablagerungsoberfläche vor der Abscheidung der SiO₂-Sootteilchen eine SiO₂-Supensionsbeschichtung vorzusehen und/oder ein Glasrohr zwischen Ablagerungsoberfläche und Sootkörper vorzusehen.

Die Dichte des Sootkörpers kann mit bekannten Verfahren bestimmt werden. Beispielsweise kann die lokale Dichte des Sootkörpers mittels computertomographischer Verfahren bestimmt werden, indem Schnittaufnahmen des Sootkörpers erstellt werden. Die mittlere Dichte ergibt sich dann aus der Mittelung über alle Messpunkte.

### Verfahren zur Herstellung eines erfindungsgemäßes dotierten SiO₂-Sootkörpers

Im Nachgang zu der Herstellung eines erfindungsgemäßen Sootkörpers, wie vorstehend definiert, wird der Sootkörper in der Regel einer Dotierung unterworfen. Diese Dotierung kann beispielsweise mit einem Halogen, insbesondere Fluor oder Chlor, erfolgen.

Daher betrifft die vorliegende Erfindung auch ein Verfahren zur Herstellung eines dotierten Sootkörpers. Das erfindungsgemäße Verfahren ist dann dadurch gekennzeichnet, dass die nachfolgenden Verfahrensschritte durchlaufen werden:
d. Bereitstellung eines SiO₂-Sootkörpers gemäß den vorstehenden Ausführungen mit mindestens einer Verdichtungsschicht; und
e. Dotierung des aus Verfahrensschritt d. resultierenden SiO₂-Sootkörpers.

In einer ersten Ausgestaltung des erfindungsgemäß gegebenenfalls vorgesehenen Verfahrensschritt e. erfolgt die Dotierung mit einem Fluor-haltigen Gas, mit welchem der aus dem Verfahrensschritt c. resultierende Sootkörper beaufschlagt wird.

Eine entsprechende Ausgestaltung der Fluorierung ist in der europäischen Offenlegungsschrift EP 2 977 359 A und der deutschen Patentschrift DE10 2012 007 520 B beschrieben, wobei die entsprechenden Offenbarungen in die vorliegende Erfindung durch Bezugnahme eingeschlossen sind.

Eine entsprechende Ausgestaltung der Chlorierung ist in der deutschen Patentschrift DE 103 03 290 B beschrieben, wobei die entsprechenden Offenbarungen in die vorliegende Erfindung durch Bezugnahme eingeschlossen sind.

Demnach erfolgt die Fluorierung als Dotierung nach dem Erhalt des Sootkörpers im Verfahrensschritt e. vorzugsweise durch die nachfolgenden Verfahrensschritte:
e.1 Entfernen von Hydroxylgruppen, indem der Sootkörper einer Dehydratationsbehandlung unterzogen wird,
e.2 Beladen des Sootkörpers mit Fluor, indem dieser in fluorhaltiger Atmosphäre bei einer Fluorierungstemperatur vom mindestens 750 °C behandelt wird, und
e.3 Nachchlorieren des mit Fluor beladenen Sootkörpers, indem dieser in chlorhaltiger Atmosphäre bei einer Nachchlorierungstemperatur behandelt wird.

Bei der erfindungsgemäß vorgesehenen Fluorierung wird bei der Dehydratationsbehandlung gemäß Verfahrensschritt e.1 (Entfernen von Hydroxylgruppen) im Sootkörper eine Konzentration an Hydroxylgruppen vorzugsweise eingestellt wird, die nach dem Verglasen einen mittleren Hydroxylgruppengehalt im Bereich von 1 bis 300 Gew.-ppm ergibt.

Die erfindungsgemäß vorgesehene Fluorierung wird bei dem Beladen des Sootkörpers gemäß Verfahrensschritt e.2 (Beladen des Sootkörpers mit Fluor) vorzugsweise so durchgeführt, dass nach dem Verglasen im synthetischen Quarzglas ein mittlerer Fluorgehalt von mindestens 1500 Gew.-ppm resultiert.

Die erfindungsgemäß vorgesehene Fluorierung wird bei dem Nachchlorieren gemäß Verfahrensschritt e.3 (Nachchlorieren des mit Fluor beladenen Sootkörpers) im Sootkörper vorzugsweise so durchgeführt wird, dass ein Hydroxylgruppengehalt eingestellt wird, der nach dem Verglasen im synthetischen Quarzglas einen mittleren Hydroxylgruppengehalt von weniger als 0,3 Gew.-ppm ergibt, und eine Beladung mit Chlor erfolgt, die nach dem Verglasen im synthetischen Quarzglas einen mittleren Chlorgehalt von mindestens 50 Gew.-ppm ergibt.

Der Sootkörper wird somit für die Dotierung einer mehrstufigen Nachbehandlung unterzogen. Dabei ist zunächst eine Dehydratationsbehandlung zu beachten. Denn in der Regel enthalten Sootkörper herstellungsbedingt einen hohen Gehalt an Hydroxylgruppen (OH-Gruppen). Die notwendige Dauer und Effektivität der Trocknung hängt neben dem anfänglichen Hydroxylgruppengehalt und vom zu erreichenden mittleren Hydroxylgruppengehalt wesentlich von der Sootdichte ab.

Bei der Dehydratationsbehandlung wird der Sootkörper rein thermisch durch Erhitzen unter Vakuum(< 2 mbar) oder in chlorfreier Inertgas-Atmosphäre (Edelgas oder Stickstoff) oder alternativ oder ergänzend dazu chemisch unter Einsatz eines Trocknungsreagenzes wie Chlor oder Fluor getrocknet. Die Dehydratationsbehandlung erfolgt in jedem Fall bei erhöhter Temperatur, wobei eine nennenswerte Verdichtung des Sootkörpers jedoch nicht erwünscht ist. Wichtig ist, dass sich im Sootkörper eine Konzentration an Hydroxylgruppen einstellt, die so ist, dass sich - würde der Sootkörper in diesem Prozessstadium unter Vakuum verglast - im Quarzglas ein mittlerer Hydroxylgruppengehalt von weniger als 300 Gew.-ppm ergibt.

Beim Fluor-Beladungsschritt wird der Sootkörper bei hoher Temperatur mit einem fluorhaltigen Behandlungsgas, wie etwa C₂F₆ , CF₄ oder SiF₄, behandelt.

Beim nachfolgenden Nachchlorieren gemäß Verfahrensschritt e.3 wird der Sootkörper bei etwa gleich hoher Temperatur oder etwas höherer Temperatur wie bei der vorangegangen Fluor-Beladung mit einem chlorhaltigen Behandlungsgas wie etwa Cl₂ behandelt. Das Nachchlorieren geht mit einer Beladung des Sootkörpers mit Chlor oder seiner weitergehenden Beladung mit Chlor einher. Als einfaches Maß dafür, dass diese Maßnahme eine hinreichende Glättung des Fluor-Verteilungsprofils bewirkt, hat sich das Konzentrationsverhältnis von Fluor und Chlor erwiesen. Dieses überschreitet erfindungsgemäß den Wert 30 nicht (in Gewichtseinheiten), das heißt, die mittlere Fluor-Konzentration ist maximal 30-fach höher als die mittlere Chlor-Konzentration und diese ist außerdem nicht geringer als 50 Gew.-ppm.

Besonders bevorzugt ist eine Ausführungsform des erfindungsgemäßen Verfahrens, in dem der Sootkörper eine spezifische Oberfläche nach BET von 7 bis 16 m²/g, vorzugsweise 10 bis 15 m²/g aufweist, bestimmt gemäß DIN-ISO 9277:2003-5.

Der Sootköper kann vor der Behandlung mit einem eine fluorhaltige Verbindung umfassenden Gases getrocknet werden, um eventuell im Sootkörper befindliche Verunreinigungen, wie beispielsweise Hydroxidgruppen (OH-Gruppen) zu entfernen, falls diese im resultierenden Quarzglaskörper unerwünscht sein sollten. Dabei kann die Trocknung thermisch und/oder chemisch erfolgen. Besonders bevorzugt ist eine Ausführungsform, in der der Sootkörper aus Verfahrensschritt c. bei einer Temperatur in einem Bereich von 700 bis 1200 °C thermisch und/oder chemisch getrocknet wird.

Weiterhin bevorzugt wird die chemische Trocknung des Sootkörpers in Gegenwart einer chlor-haltigen Verbindung durchgeführt. Besonders bevorzugt ist Verwendung von Chlor (Cl₂).

Das thermische Trocknen des Sootkörpers wird vorzugsweise in Gegenwart eines oder mehrerer Inertgase durchgeführt. Auf diese Weise wird verhindert, dass bereits gereinigte Bereiche des Sootkörpers erneut kontaminiert werden. Vorzugsweise ist das Inertgas ausgewählt aus der Gruppe bestehend aus He, Ar, N₂ sowie Mischungen davon.

Besonders bevorzugt ist eine Ausführungsform, in der der Sootkörper aus Verfahrensschritt c. zuerst in Gegenwart eines Inertgases und dann in Gegenwart einer chlorhaltigen Verbindung getrocknet wird, wobei die Temperatur jeweils in einem Bereich von 700 bis 1200 °C liegt.

### Erfindungsgemäßer dotierter SiO₂-Sootkörpers

Die vorliegende Erfindung betrifft einen dotierten SiO₂-Sootkörper, welcher erhältlich ist gemäß dem vorbeschriebenen Verfahren.

Des Weiteren betrifft die vorliegende Erfindung einen dotierten SiO₂-Sootkörper, der eine erste Verdichtungsschicht aus SiO₂-Teilchen aufweist, die eine Dichte von 37 % bis 70 %, weiter bevorzugt 45 bis 65 %, noch weiter bevorzugt 50 bis 60 %, jeweils bezogen auf vollständig konsolidiertes Quarzglas, aufweist.

Für weitere Merkmale des dotierten SiO₂-Sootkörpers wird auf obige Ausführungen verwiesen.

### Verfahren zur Herstellung eines erfindungsgemäßes Quarzglaskörpers

Im Nachgang zu der Dotierung wird der dotierte Sootkörper in der Regel in einem weiteren, erfindungsgemäß vorgesehenen Verfahrensschritt verglast.

Daher betrifft die vorliegende Erfindung auch ein Verfahren zur Herstellung eines Quarzglaskörpers. Das erfindungsgemäße Verfahren ist dann dadurch gekennzeichnet, dass die nachfolgenden Verfahrensschritte durchlaufen werden:
Daher umfasst das erfindungsgemäße Verfahren insbesondere auch einen Verfahrensschritt e., wie nachstehend definiert:
f. Bereitstellung eines dotierten SiO₂-Sootkörpers gemäß den vorstehenden Ausführungen; und
g. Verglasen des aus Verfahrensschritt f. resultierenden SiO₂-Sootkörers unter Erhalt eines Quarzglaskörpers.

In dem abschließenden Verfahrensschritt g. wird der dotierte Sootkörper verglast, wobei der Druck innerhalb der Prozesskammer, in der die Verglasung erfolgt, geringer ist als der Druck außerhalb der Prozesskammer.

Vorzugsweise liegt die Verglasungstemperatur im Verfahrensschritt e. in einem Bereich von 1200 bis 1500 °C, vorzugsweise 1250 bis 1350 °C. Um Blasenbildung im späteren Quarzglas zu vermeiden, hat es sich als vorteilhaft erwiesen, wenn während der Verglasung der Druck innerhalb der Prozesskammer geringer ist als außerhalb der Prozesskammer, d.h. die Verglasung bei vermindertem Druck durchgeführt wird. Dies hat weiterhin den Vorteil, dass das Material der Prozesskammer nicht durch aggressive und korrosive Gase angegriffen wird und daher einem verringerten Verschleiß unterliegt. Daher ist eine Ausführungsform bevorzugt, in der das Verglasen im Verfahrensschritt g. vorzugsweise bei einem Druck von weniger als 1 mbar erfolgt. Folglich sollte der Druck innerhalb der Prozesskammer vorzugsweise weniger als 1 mbar betragen. Eine weitere Verfahrensweise der Verglasung kann in einer Fluor-haltigen Atmosphäre bei reduziertem Druck von 10 bis 200 mbar durchgeführt werden.

Um den Herstellungsprozess des Quarzglases zu optimieren und die Materialien, insbesondere der Prozesskammer, zu schonen, hat es sich als vorteilhaft erwiesen, wenn die Dotierung des Sootkörpers und die Verglasung des fluorierten Zwischenproduktes in unterschiedlichen Prozesskammern erfolgen. Daher erfolgt gemäß erfindungsgemäßen Verfahren die Verglasung im Verfahrensschritt g. üblicherweise in einer zweiten Prozesskammer, die sich von der ersten Prozesskammer unterscheidet, in welcher die Dotierung gemäß Verfahrensschritt e. durchgeführt wird. Auf diese Weise kann jede der Prozesskammern für die entsprechenden Prozessschritte optimiert werden und eine übermäßige Belastung der Materialien, beispielsweise durch aggressive und korrosive Gase bei hohen Temperaturen, wird vermieden. Daher ist eine Ausführungsform bevorzugt, in der das Verglasen im Verfahrensschritt g. in einer zweiten Prozesskammer erfolgt, die sich von der ersten Prozesskammer, in der die Dotierung im Verfahrensschritt e. durchgeführt werden, unterscheidet. Dabei kann es sich bei der zweiten Prozesskammer beispielsweise um einen Zonenofen handeln, in dem die Verglasung des fluorierten Sootkörpers zonenweise erfolgt. Vorzugsweise wird die zweite Prozesskammer nicht mit fluorhaltigen Gasen beaufschlagt.

Weiterhin bevorzugt handelt es sich bei der zweiten Prozesskammer um einen Verglasungsofen, vorzugsweise um einen Zonensinterofen. Derartige Öfen sind dem Fachmann bekannt und können entsprechend den jeweiligen Anforderungen an die Größe und Form des Sootkörpers im erfindungsgemäßen Verfahren eingesetzt werden. Das Verglasen kann vorzugsweise im Vakuum, beispielsweise in einem Vakuum durchgeführt werden. Das Vakuum während der Verglasung beträgt vorzugsweise weniger gleich 10 mbar, weiter bevorzugt weniger gleich 1 mbar, noch weiter bevorzugt weniger gleich 0,1 mbar.

Die erfindungsgemäßen Verfahrensschritte e. und/oder g. können auch in einem Muffelofen durchgeführt werden.

Die erfindungsgemäßen Verfahrensschritte e. und/oder g. können auch in einem Muffelofen mit einem Quarzglastiegelrohrs durchgeführt werden.

Nach dem Erhalt des verglasten Quarzglaskörpers können die vorhandenen Verdichtungsschichten aus dem Quarzglaskörper entfernt werden. Diese erfolgt vorzugsweise durch eine mechanische Bearbeitung des Quarzglaskörpers. Eine Möglichkeit, die Verdichtungsschichten zu entfernen, ist ein Bohren des Quarzglaskörpers.

### Erfindungsgemäßer Quarzglaskörper

Die vorliegende Erfindung betrifft ferner einen Quarzglaskörper, welcher erhältlich ist gemäß dem vorbeschriebenen Verfahren und welcher erhalten wird durch Verglasen eines gegebenenfalls dotierten erfindungsgemäßen Sootkörper.

Der erfindungsgemäße Quarzglaskörper weist vorzugsweise eine Dotierung an Fluor und/oder Chlor auf.

Der erfindungsgemäße Quarzglaskörper weist vorzugsweise eine Dotierung an Fluor und/oder Chlor in einer Menge Konzentration von 1000 Gew.-ppm bis 20000 Gew.-ppm, weiter bevorzugt 1500 Gew.-ppm bis 17000 Gew.-ppm, auf, wobei die Dotierung homogen über den Quarzglaskörper verteilt ist.

Aufgrund der speziellen Herstellung des erfindungsgemäße Quarzglaskörpers beträgt eine Variation der Konzentration und Dotierung entlang der Rotationsachse des zylindrischen Hohlkörpers maximal +/- 10%, vorzugsweise +/- 5%.

Aufgrund der speziellen Herstellung des erfindungsgemäße Quarzglaskörpers beträgt eine Variation der Konzentration und Dotierung radial senkrecht zur Rotationsachse des zylindrischen Hohlkörpers in einem Bereich von 0 bis 70 % der Wandstärke von maximal +/- 10 %, vorzugsweise +/- 5 %.

### KURZE ZUSAMMENFASSUNG DER ABBILDUNGEN

Die folgenden schematischen Zeichnungen zeigen Aspekte der Erfindung zum besseren Verständnis der Erfindung in Verbindung mit einigen beispielhaften Abbildungen, wobei
- Abbildung 1: ein Beispiel eines radialen Dichteprofils mit Dichtesprung zeigt; und
- Abbildung 2: typische Brechzahlprofile eines Glaskörpers, resultierend aus dem erfindungsgemäßen Verfahren zeigt.

### Abbildung 1:

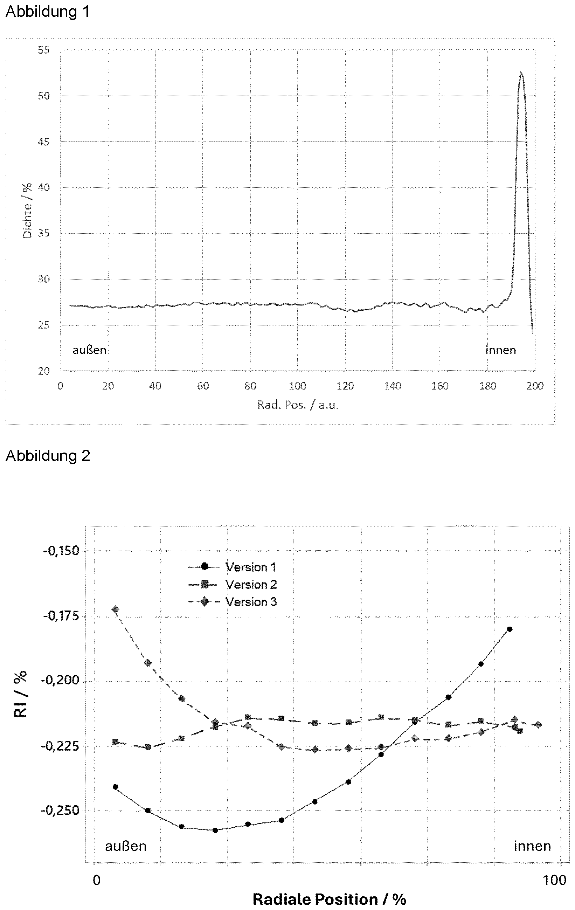

Die Abbildung 1 zeigt ein Beispiel eines radialen Dichteprofils mit Dichtesprung.

### Abbildung 2:

In dieser Abbildung 2 bezeichnet die radiale Position "0 %" die Außenoberfläche des erfindungsgemäßen Hohlzylinders und die höchsten Werte der radialen Position die Innenbohrung.

Die kreisförmigen Symbole (Version 1) stammen von einem Zylinder, bei dem ein herkömmlicher Sootkörper mit über den ganzen Radius konstanter Dichte verwendet wurde. Nach der Fluorierung im Muffelofen wurde der Körper im Zonensinterofen im Vakuum (< 0,1 mbar) klargesintert. Beim grün dargestellten Zylinder (Version 2) wurde ein radiales Sootdichteprofil wie in der Abbildung 1 dargestellt, verwendet und wiederum im Vakuum verglast. Dadurch ist die Brechzahländerung zwischen der Innenoberfläche und dem Brechzahlminimum nur sehr gering.

Beim durch Quadrate gekennzeichneten Fluorprofil (Version 3) wurde zusätzlich zur Barriere die Sinterung nicht im Vakuum, sondern im abgeschieberten Ofen durchgeführt, der zu Beginn des Verfahrens mit 50 mbar CF₄ geflutet wurde. Dadurch kann ein über die gesamte Wandstärke flaches Brechzahlprofil erreicht werden. Alternativ können dazu auch andere Fluor-haltige Gase verwendet werden. Unter einem abgeschieberten Ofen wird erfindungsgemäß ein Ofen verstanden, der mit 50 mbar CF₄ geflutet und danach abgeschlossen (abgeschiebert) wird.

## Patentansprüche

1. Verfahren zur Herstellung eines SiO₂-Sootkörpers, **gekennzeichnet durch** die nachfolgenden Verfahrensschritte:
a. Verdampfen eines siliziumhaltigen Einsatzmaterials unter Bildung eines Einsatzmaterialdampfes;
b. Zuführen des aus Verfahrensschritt a. resultierenden Einsatzmaterialdampfes zu einer Reaktionszone, in der das Einsatzmaterial durch Pyrolyse oder durch Hydrolyse zu SiO₂-Partikeln umgesetzt wird; und
c. Abscheiden der aus Verfahrensschritt b. resultierenden SiO₂-Teilchen auf einer Ablagerungsfläche unter Ausbildung von einem Sootkörper als rohrförmiger Hohlkörper,
**dadurch gekennzeichnet, dass** im Verfahrensschritt c. der rohrförmige Hohlkörper des SiO₂-Sootkörpers so abgeschieden wird, dass im Bereich der Innenseite des rohrförmigen Hohlkörpers eine erste Verdichtungsschicht aus SiO₂-Teilchen gebildet wird, die eine Dichte von 37 % bis 70 %, weiter bevorzugt 40 bis 65 %, noch weiter bevorzugt 50 bis 60 %, jeweils bezogen auf vollständig konsolidiertes Quarzglas, aufweist.

2. Verfahren nach Patentanspruch 1, **dadurch gekennzeichnet, dass** im Verfahrensschritt c. auf der Ablagerungsoberfläche zunächst eine erste Sootschicht aus SiO₂-Teilchen aufgebaut wird, wobei die erste Sootschicht eine Dichte von 15 bis 35 %, weiter bevorzugt 20 bis 30 %, jeweils bezogen auf vollständig konsolidiertes Quarzglas, aufweist, und auf der ersten Sootschicht die erste Verdichtungsschicht aufgebaut wird.

3. Verfahren nach Patentanspruch 1 oder 2, **dadurch gekennzeichnet, dass** im Verfahrensschritt c. auf der ersten Verdichtungsschicht eine zweite Sootschicht aus SiO₂-Teilchen aufgebracht wird, wobei die zweite Sootschicht eine Dichte von 15 bis 35 %, weiter bevorzugt 20 bis 32 %, noch weiter bevorzugt 25 bis 29 %, jeweils bezogen auf vollständig konsolidiertes Quarzglas, aufweist.

4. Verfahren nach einem der Patentansprüche 1 bis 3, **dadurch gekennzeichnet, dass** die erste Verdichtungsschicht eine radiale Schichtdicke a von 1 bis 10 mm, weiter bevorzugt 2 bis 8 mm, noch weiter bevorzugt 3 bis 7 mm, aufweist.

5. Verfahren zur Herstellung eines dotierten Sootkörpers, **gekennzeichnet durch** die nachfolgenden Verfahrensschritte:
d. Bereitstellung eines SiO₂-Sootkörpers gemäß einem der Patentansprüche 1 bis 4;
e. Dotierung des aus Verfahrensschritt d. resultierenden SiO₂-Sootkörpers.

6. Verfahren nach Patentanspruch 5, **dadurch gekennzeichnet, dass** der SiO₂-Sootkörper in dem Verfahrensschritt e. mit einem Fluor- und/oder Chlor-haltigen Gas beaufschlagt wird.

7. Verfahren zur Herstellung eines Quarzglaskörpers, **gekennzeichnet durch** die nachfolgenden Verfahrensschritte:
f. Bereitstellung eines dotierten SiO₂-Sootkörpers gemäß einem der Patentansprüche 5 oder 6; und
g. Verglasen des aus Verfahrensschritt f. resultierenden SiO₂-Sootkörers unter Erhalt eines Quarzglaskörpers.

8. Verfahren nach Patentanspruch 7, **dadurch gekennzeichnet, dass** der aus Verfahrensschritt g. resultierende Quarzglaskörper in einem Verfahrensschritt h. mechanisch bearbeitet wird, so dass die Verdichtungsschicht(en) aus dem Quarzglaskörper durch Bohren entfernt wird/werden.

9. SiO₂-Sootkörper, erhältlich nach einem Verfahren gemäß einem der Patentansprüche 1 bis 6.

10. Quarzglaskörper, erhältlich nach einem Verfahren gemäß Patentanspruch 7 oder 8.

11. SiO₂-Sootkörper aus synthetischem Quarzglas in der Form eines rohrförmigen Hohlkörpers, **dadurch gekennzeichnet, dass** der rohrförmige Hohlkörper eine erste Verdichtungsschicht aufweist, wobei die Verdichtungsschicht eine Dichte von 37 % bis 70 %, weiter bevorzugt 45 bis 65 %, noch weiter bevorzugt 50 bis 60 %, jeweils bezogen auf vollständig konsolidiertes Quarzglas, aufweist.

12. SiO₂-Sootkörper nach Patentanspruch 11, **dadurch gekennzeichnet, dass** die Dichte der ersten Verdichtungsschicht in dem Sootkörper um mindestens 5 %, weiter bevorzugt mindestens 10 %, noch weiter bevorzugt mindestens 20 %, größer ist als die mittlere Dichte des Sootkörpers außerhalb der ersten Verdichtungsschicht und/oder der Sootkörper eine erste Sootschicht aufweist, wobei die erste Sootschicht eine Dichte von 15% bis 35 %, weiter bevorzugt 20 % bis 30 %, aufweist und wobei diese erste Sootschicht die innere Schicht des rohrförmigen Hohlzylinders ausbildet.

13. Quarzglaskörper, aufweisend eine Dotierung an Fluor und/oder Chlor in einer Menge Konzentration von 1000 Gew.-ppm bis 20000 Gew.-ppm, weiter bevorzugt 1500 Gew.-ppm bis 17000 Gew.-ppm, wobei die Dotierung homogen über den Quarzglaskörper verteilt ist.

14. Quarzglaskörper nach Patentanspruch 13, **dadurch gekennzeichnet, dass** der Quarzglaskörper eine Variation der Konzentration und Dotierung entlang der Rotationsachse des zylindrischen Hohlkörpers von maximal +/- 10%, vorzugsweise +/- 5%, aufweist.

15. Quarzglaskörper nach Patentanspruch 13 oder 14, **dadurch gekennzeichnet, dass** der Quarzglaskörper eine Variation der Konzentration und Dotierung radial senkrecht zur Rotationsachse des zylindrischen Hohlkörpers in einem Bereich von 0 bis 70 % der Wandstärke von maximal +/- 10 %, vorzugsweise +/- 5 %, aufweist.
